(19) Europäisches Patentamt
European Patent Office
Office européen des brevets

(11) **EP 3 898 865 B1**

(12) **EUROPÄISCHE PATENTSCHRIFT**

(45) Veröffentlichungstag und Bekanntmachung des Hinweises auf die Patenterteilung:
**05.02.2025 Patentblatt 2025/06**

(21) Anmeldenummer: **19835369.0**

(22) Anmeldetag: **17.12.2019**

(51) Internationale Patentklassifikation (IPC):
***C09J 109/02*** *(2006.01)*

(52) Gemeinsame Patentklassifikation (CPC):
(C-Sets verfügbar)
**C08L 9/02;** C09J 109/02 (Forts.)

(86) Internationale Anmeldenummer:
**PCT/EP2019/085757**

(87) Internationale Veröffentlichungsnummer:
**WO 2020/127351 (25.06.2020 Gazette 2020/26)**

(54) **VERFAHREN ZUR HERSTELLUNG EINER HAFTKLEBEMASSE AUF BASIS VON ACRYLNITRIL-BUTADIEN-KAUTSCHUK SOWIE KLEBEBAND, ENTHALTEND DIESE HAFTKLEBEMASSE**

PROCESS FOR PRODUCING A PRESSURE-SENSITIVE ADHESIVE BASED ON ACRYLONITRILE-BUTADIENE RUBBER AND ADHESIVE TAPE COMPRISING SAID ADHESIVE

PROCÉDÉ DE PRODUCTION D'UNE MATIÈRE ADHÉSIVE DE CONTACT À PARTIR D'UN CAOUTCHOUC ACRYLONITRILE-BUTADIÈNE AINSI QUE RUBAN ADHÉSIF CONTENANT LADITE MATIÈRE ADHÉSIVE DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2018 DE 102018222373**
**20.12.2018 DE 102018222679**

(43) Veröffentlichungstag der Anmeldung:
**27.10.2021 Patentblatt 2021/43**

(73) Patentinhaber: **tesa SE**
**22848 Norderstedt (DE)**

(72) Erfinder:
- **SCHÖNROCK, Julia**
  **22848 Norderstedt (DE)**
- **LIM, CaiRong**
  **22609 Hamburg (DE)**
- **TEPE, Yeliz**
  **22848 Norderstedt (DE)**

(74) Vertreter: **tesa SE**
**Hugo-Kirchberg-Straße 1**
**22848 Norderstedt (DE)**

(56) Entgegenhaltungen:
**WO-A1-2018/153618**
**DE-A1- 102016 207 822**
**DE-A1- 102017 206 083**
**US-A1- 2018 230 342**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)

C-Sets
C09J 109/02, C08L 9/02, C08L 2205/025

## Beschreibung

Die vorliegende Erfindung gemäß den vorliegenden Ansprüchen betrifft ein Verfahren zur Herstellung einer gehärteten Haftklebemasse aus einer Zusammensetzung enthaltend mindestens einen festen Acrylnitril-Butadien-Kautschuk, mindestens ein Klebharz sowie gegebenenfalls mindestens einen flüssigen Acrylnitril-Butadien-Kautschuk, wobei die Zusammensetzung einer Elektronenbestrahlung (ESH) mit einer Beschleunigungsspannung pro 1 $\mu$m Schichtdicke der Zusammensetzung von 1,8 bis 2,38 kV und einer Gesamtstrahlendosis von 5 bis 50 kGy unterzogen wird. Weiterhin betrifft die vorliegende Erfindung eine gehärtete Haftklebemasse, welche durch das erfindungsgemäße Verfahren erhalten wird bzw. erhältlich ist. Zudem betrifft die vorliegende Erfindung ein ein- oder beidseitig klebendes Klebeband, umfassend eine erfindungsgemäß erhältliche gehärtete Haftklebemasse auf einer Trägerschicht. Schließlich betrifft die vorliegende Erfindung die Verwendung der erfindungsgemäß erhältlichen Haftklebemasse oder eines erfindungsgemäßen Klebebandes zur Verklebung von Bauteilen in elektronischen Geräten, insbesondere in mobilen elektronischen Geräten, bevorzugt Tablets, Mobiltelefone oder Smart-Watches.

## Stand der Technik

Haftklebemassen sind seit langem bekannt. Als Haftklebemassen werden Klebemassen bezeichnet, welche bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruhen auf ihren adhäsiven und kohäsiven Eigenschaften. Als Basis für Haftklebemassen kommen verschiedene Verbindungen in Frage.

Klebebänder, welche mit Haftklebemassen ausgerüstet sind (auch als Haftklebebänder bezeichnet), werden heute im industriellen und privaten Bereich in vielfältiger Weise verwendet. Üblicherweise bestehen Haftklebebänder aus einer Trägerfolie, welche ein- oder beidseitig mit einer Haftklebmasse ausgerüstet ist. Es gibt auch Haftklebebänder, welche ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.

Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Acrylnitril-Butadien-Kautschuk (auch NBR bzw. nitrile butadiene rubber genannt) bezeichnet einen Synthesekautschuk, welcher durch Copolymerisation von Acrylnitril und Buta-1,3-dien in Masseverhältnissen von ungefähr 52:48 bis 10:90 gewonnen wird. Seine Herstellung erfolgt praktisch ausschließlich in wässriger Emulsion. Die dabei resultierenden Emulsionen werden als solche (NBR-Latex) eingesetzt oder zum Festkautschuk aufgearbeitet. Die Eigenschaften des Nitrilkautschuks hängen vom Verhältnis der Ausgangsmonomeren und von seiner Molmasse ab. Die aus Nitrilkautschuk zugänglichen Vulkanisate besitzen eine hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus. Ihre Witterungsbeständigkeit ist dagegen eher mangelhaft.

Acrylnitril-Butadien-Kautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch das Molekulargewicht bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis 15 °C und führt im Gegensatz zur Heißpolymerisation, welche üblicherweise bei 30 bis 40 °C durchgeführt wird, zu einer geringeren Anzahl von Kettenverzeigungen.

NBR Kautschuke sind von einer Vielzahl von Herstellern wie zum Beispiel Nitriflex, Zeon, LG Chemicals, Kumho Petrochemicals und Arlanxeo erhältlich.

Carboxylierte NBR-Typen entstehen durch Terpolymerisation von Acrylnitril und Butadien mit kleinen Anteilen an (Meth)Acrylsäure in Emulsion. Sie zeichnen sich durch hohe Festigkeit aus. Die selektive Hydrierung der C,C-Doppelbindung von NBR führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Bremsbeziehungsweise Hydraulikflüssigkeiten). Die Vulkanisation erfolgt mit üblichen Schwefelvernetzern, Peroxiden oder mittels energiereicher Strahlung.

Neben carboxylierten oder hydrierten NBR Kautschuken gibt es auch flüssige NBR-Kautschuke. Diese werden während der Polymerisation durch die Zugabe von Polymerisationsreglern in ihrem Molekulargewicht begrenzt und werden daher als flüssige Kautschuke erhalten.

Zur Einstellung anwendungsgerechter Eigenschaften können Haftklebemassen durch Zumischen von Klebharzen, Weichmacher, Vernetzern oder Füllstoffen modifiziert werden.

Füllstoffe werden beispielsweise zur Steigerung der Kohäsion einer Haftklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix.

Füllstoffe werden auch zur Gewichts- beziehungsweise Volumenerhöhung in Papier, zu Kunststoffen sowie zu Kleb- und Anstrichstoffen und zu anderen Produkten beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt.

Auch bei Kautschuk und synthetischen Elastomeren kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße.

Man kann anorganische und organische Füllstoffe auch nach ihrer Dichte unterscheiden. So erhöhen die oft in Kunststoffen und auch Klebemassen verwendeten anorganischen Füllstoffe wie Kreide, Titandioxid, Calcium- und Bariumsulfat die Dichte des Composites, da sie selber eine Dichte aufweisen, die höher ist als die des Polymeren. Bei gleicher Schichtdicke ist das Flächengewicht dann höher.

Daneben gibt es Füllstoffe, welche die Gesamtdichte des Composites reduzieren können. Hierzu zählen Mikrohohlkugeln, sehr voluminöse Leichtfüllstoffe. Die Kugeln sind mit Luft, Stickstoff oder Kohlendioxid gefüllt, die Kugelschalen bestehen aus Glas, bei einigen Produkten auch aus einem Thermoplasten.

Neben Füllstoffen können die Haftklebemassen auch so genannte Weichmacher enthalten. Weichmacher sind Plastifizierungsmittel wie zum Beispiel niedermolekulare Polyacrylate, Weichharze, Phosphate oder Polyphosphate, paraffinische und naphthenische Öle, Oligomere wie Oligobutadienen, -isoprenen, flüssigen Terpenharze, pflanzliche und tierische Ölen und Fette. Weichharze können die gleiche chemische Basis wie die unten aufgeführten Klebharze aufweisen, unterscheiden sich von diesen jedoch durch ihren Erweichungspunkt, der bei < 40 °C liegt.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken inerte Trennhilfsmittel wie Talkum, Silicate (Talk, Ton, Glimmer), Zinkstearat und PVC-Puder zugesetzt.

Mit zunehmender Verbreitung von elektronischen Geräten steigen die Anwendungsgebiete derselben. Daraus ergeben sich auch wachsende Anforderungen an die verbauten Komponenten. So wird es durch die Entwicklung von am Körper getragenen elektronischen Geräten (so genannte Wearables) wie etwa Smart-Watches immer wichtiger, dass die dort verwendeten Verklebungen eine hohe Resistenz gegenüber verschiedenen Chemikalien aufweisen und auch nach längerer Lagerung in verschiedenen Medien keine Klebkraft verlieren. Ähnliche Anforderungen werden auch vermehrt an andere elektronische Geräte wie Smartphones (Mobiltelefone), Tablets, Notebooks, Kameras, Videokameras, Tastauren, Touchpads und ähnliches gestellt.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -Instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler

- Uhren und Chronometer
- Solarzellenmodule, wie etwa elektrochemische Farbstoff-Solarzellen, organische
- Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen und chemischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, welche üblicherweise in Innenräumen installiert sind und nicht oder kaum bewegt werden. Die erfindungsgemäß verwendete Klebemasse hat sich als besonders bevorzugt herausgestellt, solche Störeinflüsse zu überstehen und im Idealfall auch abzuschwächen oder zu kompensieren.

Die Erfindung bezieht sich dementsprechend besonders bevorzugt auf Mobilgeräte, da die erfindungsgemäß eingesetzte Klebemasse hier aufgrund ihrer unerwartet guten Eigenschaften einen besonderen Nutzen hat. Nachfolgend sind einige portable Geräte aufgeführt, ohne sich durch die konkret genannten Vertreter in dieser Liste bezüglich des Gegenstands der Erfindung unnötig beschränken zu wollen:

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse,
- Zeichenpads, Grafiktabletts, Mikrophone, Lautsprecher, Spielkonsolen, Gamepads,
- Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für
- zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Da die Haftklebebänder, welche in solchen Anwendungen eingesetzt werden, auch in Kontakt mit Reinigungsflüssigkeiten und anderen Chemikalien (wie beispielsweise Sebum, Ölsäure, Parfüm, Sonnencreme etc.) kommen können, ist die Verwendung von chemikalienbeständigen Haftklebemassen erforderlich. Grundsätzlich kann eine hohe Beständigkeit gegenüber Chemikalien mit gleicher Polarität sehr leicht erreicht werden. Jedoch ist es bedeutend anspruchsvoller, eine hohe Beständigkeit gegenüber Chemikalien unterschiedlicher Polarität, insbesondere gegenüber nicht polaren Verbindungen, wie Sebum oder Ölsäure, zu erreichen.

In der Offenlegungsschrift DE 3834879 A werden Haftklebemassen auf Basis von Acrylnitril-Butadien-Kautschuk (NBR Kautschuk) offenbart, welche als Klebharz ein Phenolharz enthalten und mittels ESH (Elektronenstrahlen) gehärtet werden können. Diese Haftklebemassen weisen jedoch keine ausreichende Beständigkeit gegen Chemikalien auf.

Weiterhin werden in der Offenlegungsschrift DE 10 2015 215 247 A1 Haftklebemassen auf Basis von Acrylnitril-Butadien-Kautschuken und Klebharzen offenbart, wobei als Klebharze auch modifizierte aromatische Kohlenwasserstoffharze eingesetzt werden können. Eine Härtung dieser Haftklebemassen mittels ESH wird in dieser Schrift nicht

offenbart. Auch diese Klebemassen weisen keine ausreichende Beständigkeit gegen Chemikalien, Schockresistenz und Scherung auf.

DE 10 2017 206083 A1 offenbart eine elektrochemische Zelle oder einen Stapel von mindestens zwei elektrochemischen Zellen, wobei mindestens zwei Komponenten der elektrochemischen Zelle oder des Stapels von elektrochemischen Zellen mittels eines Haftklebstreifens gegeneinander verklebt sind, der sich durch dehnendes Verstrecken im Wesentlichen in der Verklebungsebene insbesondere rückstands- und zerstörungsfrei wieder ablösen lässt, wobei der Haftklebstreifen eine oder mehrere Haftklebemasseschichten und gegebenenfalls eine oder mehrere Trägerschichten umfasst, und wobei die eine äußere obere und eine äußere untere Fläche des Haftklebstreifens von der oder den Haftklebemasseschichten gebildet sind.

Aus US 2018/230342 A1 ist ein Haftklebematerial bekannt, das als Basispolymer mindestens einen oder mehrere Acrylnitril-Butadien-Festkautschuke und Klebharze enthält, wobei der Anteil der Klebharze im Bereich von 30 bis 130 phr liegt, wobei der Acrylnitril-Gehalt in dem/den Acrylnitril-Butadien-Festkautschuk(en) zwischen 10 und 30 Gewichtsprozent liegt.

WO 2018/153618 A1 betrifft einen Haftklebestreifen umfassend einen Träger und eine Haftklebemassenschicht, die auf einer Oberfläche des Trägers angeordnet ist. Die Haftklebemassenschicht besteht aus einer Haftklebemasse, die als Basispolymer mindestens einen festen Acrylnitril-Butadien-Kautschuk und ferner ein Klebharz enthält, wobei der Anteil an Klebharz bei insgesamt 30 bis 130 phr liegt.

In DE 10 2016 207822 A1 wird eine Selbstklebemasse bestehend aus einem Gemisch, welches Kautschuk, insbesondere Naturkautschuk, mindesten ein Klebharz mit einem Anteil bei 40 bis 130 phr und expandierte Mikrokugeln enthält.

## Aufgabe der Erfindung

Die Aufgabe der vorliegenden Erfindung bestand demnach in der Herstellung einer Haftklebemasse, welche eine verbesserte Beständigkeit gegenüber Chemikalien, insbesondere gegenüber polaren sowie nicht polaren Verbindungen, bei gleichzeitig verbesserter Schockresistenz und Scherung aufweist. Diese Haftklebemasse sollte das Eigenschaftsprofil von üblichen Haftklebestoffen zeigen und sich kostengünstig herstellen lassen. Eine weitere Aufgabe der vorliegenden Erfindung bestand in der Bereitstellung eines ein- oder beidseitigen Klebebands, umfassend die hergestellte Haftklebemasse. Zudem bestand eine Aufgabe der vorliegenden Erfindung in der Bereitstellung einer Haftklebemasse oder eines die Haftklebemasse enthaltendes Klebeband, welche sich zur Verklebung von Bauteilen in elektronischen Geräten, insbesondere in mobilen elektronischen Geräten, bevorzugt Tablets, Mobiltelefone oder Smart-Watches, eignet.

## Lösung der Aufgabe

Die Aufgabe wird gelöst durch ein Verfahren zur Erzeugung einer gehärteten Haftklebemasse aus einer Zusammensetzung enthaltend

a) mindestens einen festen Acrylnitril-Butadien-Kautschuk, welcher eine Glasübergangstemperatur Tg von weniger als -30 °C (gemessen nach der angegebenen Messmethode) aufweist,
b) mindestens ein Klebharz und
c) mindestens einen flüssigen Acrylnitril-Butadien-Kautschuk, welcher eine Glasübergangstemperatur Tg von mehr als -30°C (gemessen nach der angegebenen Messmethode) aufweist,

dadurch gekennzeichnet, dass
die Zusammensetzung einer Elektronenbestrahlung (ESH) mit einer Beschleunigungsspannung pro 1 $\mu$m Schichtdicke der Zusammensetzung von 1,8 bis 2,38 kV und einer Gesamtstrahlendosis von 5 bis 50 kGy unterzogen wird, wobei die gehärtete Haftklebemasse erhalten wird.

Weiterhin wird die Aufgabe gelöst durch eine gehärtete Haftklebemasse, welche gemäß dem erfindungsgemäßen Verfahren erhalten wird oder erhältlich ist.

Die erfindungsgemäß erhältliche Haftklebemasse kann beispielsweise als trägerloses oder trägerhaltiges Haftklebeband verwendet werden. Die Erfindung betrifft somit weiterhin ein ein- oder beidseitig klebendes Klebeband, umfassend eine erfindungsgemäß erhältliche gehärtete Haftklebemasse auf einer Trägerschicht.

Zudem betrifft die Erfindung ein beidseitig klebendes Klebeband, umfassend eine erfindungsgemäß erhältliche gehärtete Haftklebemasse, wobei das beidseitig klebende Klebeband insbesondere trägerlos ausgestaltet ist.

Schließlich wird die Aufgabe gelöst durch die Verwendung einer erfindungsgemäßen gehärteten Haftklebemasse oder eines erfindungsgemäßen Klebebandes zur Verklebung von Bauteilen in elektronischen Geräten, insbesondere in mobilen elektronischen Geräten, bevorzugt Tablets, Mobiltelefone oder Smart-Watches.

Der Erfindung liegt die Erkenntnis zugrunde, dass die Beständigkeit gegenüber Chemikalien, insbesondere sowohl gegenüber unpolaren Substanzen wie Ölsäure und Sebum als auch gegenüber polaren Verbindungen wie Wasser oder Methanol, durch die Bestrahlung der Haftklebemasse mit Elektronenstrahlen (ESH) erhöht werden kann, ohne jedoch die Klebkraft negativ zu beeinflussen. Durch die Elektronenstrahlung (ESH) kann zudem die Schockresistenz und Beständigkeit gegenüber Scherung der Haftklebemasse erhöht werden. Aufgrund der hohen Beständigkeit gegenüber Chemikalien sowie der hohen Klebkraft, Schockresistenz und Beständigkeit gegenüber Scherung ist eine haltbare und dauerhafte Verklebung von Verbindungen möglich, welche in Kontakt mit Chemikalien kommen und/oder Stößen und/oder Scherung ausgesetzt sind. Dadurch eignet sich die erfindungsgemäße Haftklebemasse insbesondere für die Verklebung von Teilen in elektronischen Geräten.

## Detaillierte Beschreibung der Erfindung

In dem erfindungsgemäßen Verfahren zur Erzeugung einer gehärteten Haftklebemasse wird eine Zusammensetzung enthaltend mindestens einen festen Acrylnitril-Butadien-Kautschuk, mindestens ein Klebharz und gegebenenfalls mindestens einen flüssigen Acrylnitril-Butadien-Kautschuk durch Elektronenbestrahlung (ESH) mit einer Beschleunigungsspannung pro 1 µm Schichtdicke der Zusammensetzung von 1,8 bis 2,38 kV und einer Gesamtstrahlendosis von 5 bis 50 kGy gehärtet.

Zur Bestrahlung der Zusammensetzung kann beispielsweise eine Anlage der Firma ELECTRON CROSSLINKING AB (Halmstad, Schweden) verwendet werden. Typischerweise wird die Zusammensetzung von beiden Seiten, d.h. symmetrisch, einer Bestrahlung mit Elektronen unterzogen, um eine gleichmäßige Härtung zu gewährleisten. Dies ist insbesondere bei größeren Dicken der zu bestrahlenden Zusammensetzung von Vorteil. Bei dünnen Zusammensetzungen mit beispielsweise 50 µm Dicke kann auch einseitig bestrahlt werden. Vorzugsweise wird vor der Bestrahlung auf der entsprechenden Seite der Liner abgenommen, insbesondere um einen Strahlungsverlust und eine Beschädigung des Liners zu vermeiden. Letztere kann insbesondere dazu führen, dass sich der Liner nach der Bestrahlung nicht mehr von der Haftklebemasse abziehen lässt. Bei geeigneter technischer Ausführung kann der Bestrahlungsvorgang inline bzw. einschrittig im Herstellprozess der gehärteten Haftklebemasse erfolgen.

Erfindungsgemäß vorteilhaft beträgt die Beschleunigungsspannung pro 1 µm Schichtdicke der Zusammensetzung 1,9 bis 2,3 kV, vorzugsweise 1,96 bis 2,24 kV, insbesondere 2 kV. Die Verwendung der zuvor genannten Beschleunigungsspannung führt zu einer verbesserten Chemikalienbeständigkeit, Schockresistenz und Beständigkeit gegenüber Scherung, ohne jedoch die Klebkraft negativ zu beeinflussen. Die Verwendung höherer oder geringerer Beschleunigungsspannungen führt nicht zu einer verbesserten Chemikalienbeständigkeit und/oder Schockresistenz und/oder Scherbeständigkeit.

Weiterhin ist es erfindungsgemäß bevorzugt, wenn zur Härtung der Zusammensetzungen eine bestimmte Strahlendosis verwendet wird. Es ist daher erfindungsgemäß vorteilhaft, wenn die Gesamtstrahlendosis 5 bis 40 kGy, vorzugsweise 5 bis 30 kGy, bevorzugt 5 bis 20 kGy, insbesondere 15 kGy, beträgt. Die zuvor angeführte Gesamtstrahlendosis bezieht sich auf die Summe aller Strahlendosen, mit welcher die Zusammensetzung gehärtet wurde. Demnach ist es erfindungsgemäß möglich, die Zusammensetzung entweder durch Bestrahlung mit mehreren Strahlendosen oder durch Bestrahlung mit lediglich einer Strahlendosis zu härten, wobei bei Härtung durch mehrere Strahlendosen die Summe aller Strahlendosen der zuvor angegebenen Gesamtstrahlendosis entspricht.

Als ersten zwingenden Bestandteil enthält die zu härtende Zusammensetzung mindestens einen festen Acrylnitril-Butadien-Kautschuk (a). Unter Acrylnitril-Butadien-Kautschuk (auch als Nitrilkautschuk oder NBR bezeichnet), wird erfindungsgemäß ein Copolymer aus Acrylnitril und 1,3-Butadien verstanden, welches auch durch die allgemeine Formel

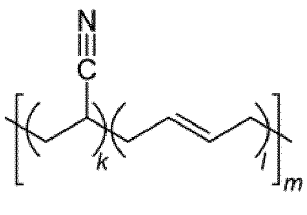

beschrieben werden kann. Die Herstellung der NBR kann durch eine radikalische Polymerisation (Kettenpolymerisation) aus den Monomeren Acrylnitril und 1,3-Butadien im Emulsionspolymerisationsverfahren erfolgen. Die Reaktion kann bei verschiedenen Temperaturen durchgeführt werden, wodurch ein stark oder weniger stark vernetzter Nitrilkautschuk entsteht. Bei der Kaltpolymerisation bei 5°C wird weniger stark vernetztes, bei der Warmpolymerisation bei 25°C - 50°C wird stärker vernetztes NBR gebildet.

Feste Acrylnitril-Butadien-Kautschuke zeichnen sich dadurch aus, dass sie eine Glasübergangstemperatur $T_g$ von weniger als -30°C, bevorzugt von weniger als -35°C, insbesondere von weniger als -40 °C, aufweisen. Die Glasübergangstemperatur kann mittels DSC gemäß DIN 53 765:1994, Abschnitt 7.1, Anmerkung 1 bestimmt werden.

Den festen Acrylnitril-Butadien-Kautschuken können inerte Trennhilfsmittel wie Talkum, Silicate (Talk, Ton, Glimmer), Zinkstearat und PVC-Puder zugesetzt sein. Vorzugsweise sind die Trennhilfsmittel gewählt aus der Gruppe bestehend aus Talkum, Silicate (Talk, Ton, Glimmer), Zinkstearat und PVC-Puder. Weiterhin vorzugsweise können dem festen Acrylnitril-Butadien-Kautschuk zur Verbesserung der Verarbeitbarkeit thermoplastische Elastomere wie beispielsweise Synthesekautschuke mit einem Anteil von bis zu 5 Gew.-%, bezogen auf die Gesamtmenge an festem Acrylnitril-Butadien-Kautschuk, zugesetzt werden. Stellvertretend genannt seien an dieser Stelle vor allem die besonders verträglichen Styrol-Isopren-Styrol (SIS)- und Styrol-Butadien-Styrol (SBS)-Typen.

Erfindungsgemäß vorteilhaft wird ein fester Acrylnitiril-Butadien-Kautschuk eingesetzt, welcher mittels Kaltpolymerisation hergestellt ist, eine Mooney-Viskosität von 55 bis 70 MU (beispielsweise bestimmbar gemäß DIN ISO 289-1:2018-12) sowie eine $T_g$ von -42°C aufweist. Ein derartiger Kautschuk ist beispielsweise unter dem Handelsnamen Nipol N 917 von der Firma Zeon Europe GmbH kommerziell erhältlich.

Erfindungsgemäß vorteilhaft werden zur Herstellung der gehärteten Haftklebemasse feste Acrylnitril-Butadien-Kautschuke eingesetzt, welche einen bestimmten Acrylnitrilgehalt aufweisen. Es ist daher erfindungsgemäß besonders vorteilhaft, wenn der mindestens eine feste Acrylnitril-Butadien-Kautschuk (a) einen Acrylnitrilgehalt von 20 bis 40 Gew.-%, vorzugsweise von 20 bis 30 Gew.-%, insbesondere von 20 bis 25 Gew.-%, jeweils bezogen auf das Gesamtgewicht des festen Acrylnitril-Butadien-Kautschuks, aufweist. Der Einsatz des mindestens einen festen Acrylnitril-Butadien-Kautschuks mit dem zuvor angeführten Acrylnitrilgehalt führt zu einer verbesserten Chemikalienbeständigkeit im Vergleich zu dem Einsatz von festen Acrylnitril-Butadien-Kautschuken, welche einen niedrigeren Acrylnitrilgehalt aufweisen.

Die zur Herstellung der gehärteten Haftklebemasse verwendete Zusammensetzung enthält den mindestens einen festen Acrylnitril-Butadien-Kautschuk bevorzugt in einer Gesamtmenge von 50 bis 80 Gew.-Teilen, vorzugsweise von 55 bis 75 Gew.-Teilen, insbesondere von 62 bis 67 Gew.-Teilen, wobei die Gew.-Teile von (a), (b) und (c) so normiert sind, dass (a) + (b) + (c) 100 ergibt. Der Einsatz des mindestens einen festen Acrylnitril-Butadien-Kautschuk in den zuvor genannten Gesamtmengen führt in Kombination mit dem Klebharz (b) sowie gegebenenfalls dem flüssigem Acrylnitril-Butadien-Kautschuk (c) zu einer besonders hohen Chemikalienbeständigkeit und Schockresistenz nach Härtung durch Elektronenbestrahlung (ESH), ohne jedoch die Klebkraft negativ zu beeinflussen.

Als zweiten wesentlichen Bestandteil enthält die erfindungsgemäße Zusammensetzung mindestens ein Klebharz (b). Unter der Bezeichnung "Klebharz", englisch "Tackifier Resins", versteht der Fachmann einen Stoff auf Harzbasis, welcher die Klebrigkeit der Zusammensetzung erhöht.

Als Klebharze können beispielsweise hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt $C_8$- und $C_9$-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von $C_8$- und $C_9$-Aromaten (zum Beispiel Regalite und Regalrez Serien; Eastman Inc. oder Arkon M; Arakawa), hydrierte Polyterpenharze (zum Beispiel Clearon M; Yasuhara), hydrierte $C_5$/$C_9$-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Besonders geeignete hydrierte Kohlenwasserstoffharze sind beispielsweise in EP 0 447 855 A1, US 4,133,731 A und US 4,820,746 A beschrieben, da durch die Abwesenheit von Doppelbindungen die Vernetzung nicht gestört werden kann.

Weiterhin können aber auch nicht hydrierte Harze eingesetzt werden, wenn Vernetzungspromotoren wie zum Beispiel mehrfunktionelle Acrylate eingesetzt werden. Auch andere nicht hydrierte Kohlenwasserstoffharze, nicht hydrierte Analoga der oben beschriebenen hydrierten Harze, können eingesetzt werden.

Zudem können kolophoniumbasierende Harze (zum Beispiel Foral, Foralyn) verwendet werden. Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Gegebenenfalls handelt es sich bei den Klebharzen um Polyterpenharze auf Basis von $\alpha$-Pinen und/oder $\beta$-Pinen und/oder $\delta$-Limone oder Terpenphenolharze.

Beliebige Kombinationen dieser können eingesetzt werden, um die Eigenschaften der resultierenden Haftklebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Besonders bevorzugt ist das mindestens eine Klebharz (b) ein modifiziertes aromatisches Kohlenwasserstoffharz. Der Einsatz derartiger Klebharze in Kombination mit dem festen Acrylnitril-Butadien-Kautschuk (a) und gegebenenfalls dem flüssigen Acrylnitril-Butadien-Kautschuk (c) führt nach Härtung der Zusammensetzung durch Elektronenbestrahlung (ESH) zu einer besonders hohen Chemikalienbeständigkeit, Schockresistenz und Scherbeständigkeit, ohne jedoch die Klebkraft negativ zu beeinflussen.

Ganz besonders bevorzugt handelt es sich bei dem modifizierten aromatischen Kohlenwasserstoffharz um ein Harz, welches durch Copolymerisation von aliphatischen Monomeren mit 5 Kohlenstoffatomen mit mindestens einem aromatischen Monomeren erhältlich ist. Ein derartiges Harz ist beispielsweise unter dem Handelsnamen Pico AR 100 von der Firma Eastman Chemical Company kommerziell erhältlich.

Es hat sich erfindungsgemäß als vorteilhaft erwiesen, wenn das mindestens eine Klebharz (b), vorzugsweise das modifizierte aromatische Kohlenwasserstoffharz, insbesondere ein durch Copolymerisation von mindestens einem Monomeren mit 5 Kohlenstoffatomen mit mindestens einem aromatischen Monomeren erhältliches Kohlenwasserstoffharz, in einer bestimmten Gesamtmenge in der Zusammensetzung enthalten ist. Es ist daher bevorzugt, wenn die Zusammensetzung das mindestens eine Klebharz (b), insbesondere das modifizierte aromatische Kohlenwasserstoffharz, in einer Gesamtmenge von 20 bis 50 Gew.-Teilen enthält, vorzugsweise von 25 bis 45 Gew.-Teilen, insbesondere von 27 bis 34,5 Gew.-Teilen, wobei die Gew.-Teile von (a), (b) und (c) so normiert sind, dass (a) + (b) + (c) 100 ergibt. Der Einsatz des mindestens einen Klebharzes (b), vorzugsweise des modifizierten aromatischen Kohlenwasserstoffharzes, insbesondere des durch Copolymerisation von mindestens einem Monomeren mit 5 Kohlenstoffatomen mit mindestens einem aromatischen Monomeren erhältlichen Kohlenwasserstoffharzes, in den zuvor angeführten Gesamtmengen führt in Kombination mit dem zuvor angeführten festen Acrylnitril-Butadien-Kautschuk (a) und gegebenenfalls dem nachfolgend beschriebenen flüssigen Acrylnitril-Butadien-Kautschuk (c) nach Härtung durch Elektronenstrahlung (ESH) zu einer besonders hohen Chemikalienbeständigkeit, Schockresistenz und Scherbeständigkeit, ohne jedoch die Klebkraft der gehärteten Haftklebemasse negativ zu beeinflussen.

Neben den zwingenden Bestandteilen (a) und (b) kann die Zusammensetzung weiterhin mindestens einen flüssigen Acyrlnitril-Butadien-Kautschuk (c) enthalten. Unter einem flüssigen Acrylnitril-Butadien-Kautschuk wird erfindungsgemäß ein Acrylnitril-Butadien-Kautschuk verstanden, welcher eine Glasübergangstemperatur $T_g$ von mehr als -30°C, bevorzugt von mehr als -25°C aufweist. Die Glasübergangstemperatur $T_g$ kann wie zuvor im Zusammenhang mit dem festen Acrylnitril-Butadien-Kautschuk beschrieben bestimmt werden. Der flüssige NBR weist ebenfalls die zuvor beschriebene allgemeine Formel auf, ist jedoch bevorzugt durch Warmpolymerisation bei 25°C - 50°C erhältlich und somit stärker vernetzt als der feste NBR (a). Bevorzugt werden flüssige Acrylnitril-Butadien-Kautschuke eingesetzt, welche eine Brookfieldviskosität von 9.000 bis 30.000 mPa*s, insbesondere 9.000 bis 16.000 mPa*s (jeweils gemessen mit Spindel 4, 12 rpm, 50 °C) aufweisen. Ein besonders bevorzugt eingesetzter flüssiger NBR ist unter dem Handelsprodukt Nipol 1312 LV von der Firma Zeon Chemical GmbH kommerziell erhältlich. Der Zusatz des flüssigen NBR (c) führt während der Bestrahlung zu einer Vernetzung der Zusammensetzung und resultiert dadurch in einer verbesserten Schockresistenz der gehärteten Haftklebemasse.

Erfindungsgemäß vorteilhaft weist der mindestens eine flüssige Acrylnitril-Butadien-Kautschuk einen bestimmten Acrylnitrilgehalt aufweist. Bevorzugte Ausführungsformen des ersten Erfindungsgegenstands sind daher dadurch gekennzeichnet, dass der mindestens eine flüssige Acrylnitril-Butadien-Kautschuk (c) einen Acrylnitrilgehalt von 25 bis 45 Gew.-%, vorzugsweise von 25 bis 40 Gew.-%, insbesondere von 28 bis 35 Gew.-%, jeweils bezogen auf das Gesamtgewicht des flüssigen Acrylnitril-Butadien-Kautschuks, aufweist. Der Einsatz derartiger flüssiger Acrylnitril-Butadien-Kautschuke (c) in Kombination mit dem zuvor beschriebenen festen NBR sowie Klebharz führt nach Härtung durch Elektronenstrahlung (ESH) zu einer verbesserten Schockresistenz, ohne jedoch die Klebkraft oder die Chemikalienbeständigkeit negativ zu beeinflussen.

Der mindestens eine flüssige Acrylnitril-Butadien-Kautschuk (c) ist bevorzugt in einer Gesamtmenge von 1 bis 10 Gew.-Teilen enthalten, vorzugsweise von 1 bis 8 Gew.-Teilen, insbesondere von 2,5 bis 6 Gew.-Teilen, wobei die Gew.-Teile von (a), (b) und (c) so normiert sind, dass (a) + (b) + (c) 100 ergibt. Der Zusatz des flüssigen NBR in den zuvor angeführten Gesamtmengen führt zu einer verbesserten Schockresistenz der gehärteten Haftklebemasse, ohne jedoch die Chemikalienbeständigkeit und die Klebkraft negativ zu beeinflussen.

Der Zusammensetzung können zur Einstellung von optischen und klebtechnischen Eigenschaften der gehärteten Haftklebemasse weitere Polymere, wie Synthesekautschuke und/oder thermoplastische Elastomere zugesetzt werden. Erfindungsgemäß bevorzugt enthält die Zusammensetzung jedoch neben den zwingenden Bestandteilen (a) und (b) sowie der optionalen Komponenten (c) keine weiteren Polymere. Es ist daher bevorzugt, wenn die Zusammensetzung von den Komponenten (a) bis (c) verschiedene Polymere in einer Gesamtmenge von 0 bis 5 Gew.-Teilen enthält, vorzugsweise von 0 bis 2 Gew.- Teilen, insbesondere von 0 Gew.- Teilen, jeweils bezogen auf (a) + (b) + (c) = 100.

Darüber hinaus kann es auch vorgesehen sein, dass die Zusammensetzung zusätzlich mindestens eine Verbindung (d), ausgewählt aus der Gruppe bestehend aus Vernetzungspromotoren, Alterungsmitteln, Trennmitteln, Füllstoffen, Farbstoffen, Weichmachern sowie deren Mischungen, enthält.

Für eine Erhöhung der Strahlenausbeute während der Elektronenstrahlhärtung können Vernetzungspromotoren verwendet werden. Als Vernetzungspromotoren können beispielsweise Vernetzungspromotoren auf der Basis multifunktionaler Acrylate oder Thiole eingesetzt werden. Es wurde jedoch überraschenderweise gefunden, dass die Zusammensetzung auch ohne zusätzlichen Vernetzungspromotor durch Bestrahlung mit Elektronen gehärtet werden

kann und nach der Härtung eine hohe Beständigkeit gegenüber Chemikalien und Scherung sowie eine hohe Schockresistenz aufweist. Das Weglassen des Vernetzungspromotors senkt die Kosten und die Komplexität bei der Herstellung der erfindungsgemäßen gehärteten Haftklebemasse. Vorzugsweise werden daher in dem erfindungsgemäßen Verfahren keine Vernetzungspromotoren eingesetzt.

Als Additive werden typischerweise genutzt:

- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Schichtsilikate, Kalziumcarbonate, Zinkoxide, Titandioxide, Aluminiumoxide oder Aluminiumoxidhydroxide.

Die Zusammensetzung enthält die mindestens eine Verbindung (d) bevorzugt in einer Gesamtmenge von 0,1 bis 5 Gew.-Teilen, insbesondere von 0,1 bis 2 Gew.-Teilen, jeweils bezogen auf (a) + (b) + (c) = 100.

Die aufgezählten Polymere sowie Verbindungen (d) müssen nicht zwingend in der Zusammensetzung enthalten sein, die Zusammensetzung kann also auch 0 Gew.-Teile, bezogen auf (a) + (b) + (c) = 100, an weiteren Polymeren und Verbindung (d) enthalten.

Die erfindungsgemäße Zusammensetzung ist gemäß einer bevorzugten Ausführungsform geschäumt. Die Schäumung erfolgt durch das Einbringen und nachfolgende Expandieren von Mikroballons.

Grundsätzlich lassen sich Schäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Physikalische Treibmittel, die in der vorliegenden Anmeldung nützlich sind, sind natürlich vorkommenden atmosphärischen Materialien, die bei der Temperatur und dem Druck, bei denen der Schaum aus der Düse austritt, gasförmig sind. Physikalische Treibmittel können in das Polymermischungsmaterial als Gas, als ein überkritisches Fluid oder als eine Flüssigkeit eingeführt, d.h. injiziert werden. Die Wahl des verwendeten physikalischen Treibmittels hängt von den gewünschten Eigenschaften in den resultierenden Schäumen ab. Andere Faktoren, die bei der Auswahl eines Treibmittels berücksichtigt werden, sind seine Toxizität, das Dampfdruckprofil, die Einfachheit der Handhabung und die Löslichkeit in Bezug auf die verwendeten polymeren Materialien. Entflammbare Treibmittel wie Pentan, Butan und andere organische Materialien wie Fluorkohlenwasserstoffe und Fluorchlorkohlenwasserstoffe können verwendet werden, aber nicht brennbare, nicht toxische, nicht ozonabbauende Treibmittel werden bevorzugt, weil sie leichter zu verwenden sind, z. B. weniger Bedenken hinsichtlich der Umwelt bestehen, usw. Geeignete physikalische Treibmittel sind z. B. Kohlendioxid, Stickstoff, $SF_6$, Stickstoffoxide, perfluorierte Flüssigkeiten wie $C_2F_6$, Edelgase wie Helium, Argon und Xenon, Luft (typischerweise eine Mischung aus Stickstoff und Sauerstoff), und Mischungen dieser Materialien.

Alternativ können im Schaum auch chemische Treibmittel verwendet werden. Geeignete chemische Treibmittel umfassen eine Mischung aus Natriumbicarbonat und Zitronensäure, Dinitrosopentamethylentetramin, p-Toluolsulfonylhydrazid, 4-4'-Oxybis(benzolsulfonyl-hydrazid, Azodicarbonamid (1,1'-Azobisformamid), p-Toluolsulfonylsemicarbazid, 5-Phenyltetrazol, 5 -Phenyltetrazol-Analoga, Diisopropylhydrazodicarboxylat, 5-Phenyl-3,6-dihydro-1,3,4-oxadiazin-2-on und Natriumborhydrid.

Bei einem syntaktischen Schaum sind Mikrohohlkugeln wie Glaskugeln oder keramische Hohlkugeln oder Mikroballons in der Zusammensetzung eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Bevorzugt erfolgt die Schäumung daher jeweils durch das Einbringen und nachfolgende Expandieren von

Mikroballons, d.h. die selbstklebende Masse Zusammensetzung ist bevorzugt mit Mikroballons geschäumt.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an unexpandierten Mikroballontypen kommerziell erhältlich, welche sich im Wesentlichen über ihre Größe und ihre zur Expansion benötigten Starttemperaturen (75 bis 220 °C) differenzieren. Ein Beispiel für kommerziell erhältliche unexpandierte Mikroballons sind die Expancel® DU-Typen (DU = dry unexpanded) von der Firma Akzo Nobel. In der Typenbezeichnung Expancel xxx DU yy (Dry unexpanded) steht dabei "xxx" für die Zusammensetzung der Mikroballonabmischung, und "yy" für die Größe der Mikroballons im expandierten Zustand.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Selbstklebemasse geeignet.

Eine geschäumte Zusammensetzung kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Akzo Nobel kommerziell erhältlich. "xxx" steht für die Zusammensetzung der Mikroballonabmischung, "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Zusammensetzung, in die diese eingearbeitet werden sollen, zur Flotation neigen, also in der Zusammensetzung während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Zusammensetzung eingearbeitet. Erst nach dem Einarbeiten in die Schicht werden die Mikroballons expandiert. Auf diese Weise ergibt sich eine gleichmäßigere Verteilung der Mikroballons in der Zusammensetzung.

Vorzugsweise werden die Mikroballons so gewählt, dass das Verhältnis der Dichte der Zusammensetzung zu der Dichte der in die Zusammensetzung einzuarbeitenden (nicht oder nur wenig vorexpandierten) Mikroballons zwischen 1 und 1:6 liegt. Erst nach oder unmittelbar bei der Einarbeitung erfolgt dann die Expansion. Bei lösungsmittelhaltigen Zusammensetzungen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß beträgt der mittlere Durchmesser der von den Mikroballons gebildeten Hohlräume in der geschäumten Zusammensetzung vorzugsweise 20 bis 150 μm, bevorzugter 20 bis 50 μm, wie zum Beispiel 40 bis 45 μm. Im Bereich von 20 bis 50 μm führen die Mikroballons zu besonders hohen Schockresistenzen der erfindungsgemäß hergestellten gehärteten Haftklebemassen.

Da hierbei die Durchmesser der von den Mikroballons gebildeten Hohlräume in den geschäumten Zusammensetzungen vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Zusammensetzung gemeint.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Zusammensetzung liegt gemäß einer bevorzugten Ausführungsform der Erfindung bei bis zu 12 Gew.-Teilen, vorzugsweise zwischen 0,25 Gew.-Teilen und 5 Gew.-Teilen, bevorzugter zwischen 0,5 und 4 Gew.-Teilen, noch bevorzugter zwischen 1 und 3,5 Gew.-Teilen, und insbesondere bei 2,0 bis 3,0 Gew.-Teilen, jeweils bezogen auf (a) + (b) + (c) = 100. In diesen Bereichen lassen sich gehärtete Haftklebemassen bereitstellen, die typischerweise eine besonders gute Balance zwischen Adhäsion und Kohäsion aufweisen.

Eine expandierbare Mikrohohlkugeln enthaltende Zusammensetzung darf zusätzlich auch nichtexpandierbare

Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die Zusammensetzung sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten Zusammensetzung beträgt vorzugsweise 400 bis 990 $kg/m^3$, bevorzugter 450 bis 800 $kg/m^3$, noch bevorzugter 500 bis 700 $kg/m^3$ und insbesondere 500 bis 600 $kg/m^3$.

Die relative Dichte beschreibt das Verhältnis der Dichte der geschäumten Zusammensetzung zur Dichte der rezepturidentischen, ungeschäumten Zusammensetzung. Die relative Dichte der Zusammensetzung beträgt vorzugsweise 0,35 bis 0,99, stärker bevorzugt 0,45 bis 0,97, insbesondere 0,50 bis 0,90.

Eine bevorzugte Zusammensetzung zur Herstellung der gehärteten Haftklebemasse umfasst:

a) mindestens einen festen Acrylnitril-Butadien-Kautschuk,
b) mindestens ein Klebharz und
c) mindestens einen flüssigen Acrylnitril-Butadien-Kautschuk.

Eine weitere bevorzugte Zusammensetzung zur Herstellung der gehärteten Haftklebemasse besteht aus:

a) mindestens einen festen Acrylnitril-Butadien-Kautschuk,
b) mindestens ein Klebharz und
c) mindestens einen flüssigen Acrylnitril-Butadien-Kautschuk.

Als fester und flüssiger Acrylnitril-Butadien-Kautschuk sowie Klebharz werden bevorzugt die zuvor genannten bevorzugten Verbindungen in den angeführten Gesamtmengen eingesetzt.

Ein zweiter Gegenstand der vorliegenden Erfindung betrifft eine gehärtete Haftklebemasse, welche nach dem erfindungsgemäßen Verfahren erhalten wird oder erhältlich ist.

In Bezug auf bevorzugte Ausführungsformen der gehärteten Haftklebemasse gilt mutatis mutandis das in Bezug auf das erfindungsgemäße Verfahren Gesagte.

Ein dritter Gegenstand der vorliegenden Erfindung ist ein ein- oder beidseitig klebendes Klebeband, umfassend eine erfindungsgemäße gehärtete Haftklebemasse auf einer Trägerschicht.

Der allgemeine Ausdruck "Klebestreifen" (Haftklebesteifen), synonym auch "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung (x-Richtung) und eine Breitenausdehnung (y-Richtung) auf. Das Klebeband weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebestreifens möglichst gleich, vorzugsweise exakt gleich.

Vorzugsweise weisen alle Schichten des Klebebands im Wesentlichen die Form eines Quaders auf. Weiter vorzugsweise sind alle Schichten vollflächig miteinander verbunden. Diese Verbindung kann durch die Vorbehandlung der Folienoberflächen optimiert werden.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleichbleibend ausgebildet ist.

Typische Konfektionierformen des erfindungsgemäßen Klebebands sind Klebebandrollen in jeglicher denkbarer Abmessung, Spulen mit langer Lauflänge und verschiedenen Breiten, Ballen, Stangen und Klebestreifen, wie sie zum Beispiel in Form von Stanzlingen erhalten werden.

Bevorzugt sind Stanzlinge in allen denkbaren Größen und Formen, beispielsweise als vollflächiger Stanzling mit gleichen oder unterschiedlichen Kantenlängen, runden oder scharfen Ecken oder auch speziell angepassten Formen, aber auch als ausgestanzter Rahmen in allen denkbaren Größen, Formen und Stegbreiten. Durch die Größe des Stanzlings kann die Haltekraft des einzelnen Verbindungspunktes angepasst werden. Die Stanzlinge können direkt auf dem Liner liegen, ohne auf der anderen Seite mit einem weiteren Liner abgedeckt zu sein, und werden so der Verarbeitung zugeführt. In diesem Fall sollte das Bauteil direkt weiterverarbeitet werden. Alternativ können die Stanzlinge auf der offenen Seite mit einem zusätzlichen angepassten Liner mit oder ohne Fingerlift versehen werden. In diesem Fall kann eine Lagerung, ein Versand oder Ähnliches stattfinden.

Allgemein bietet es sich an, Stanzlinge mittels maschinell automatisierter Prozesse zu applizieren bzw. auf Bauteilen zu verkleben. Hierbei kann ein eventuell noch vorhandener Liner bei Bedarf entfernt werden.

Weiterhin kann das Klebeband schon in Segmente geschnitten auf Rollen vorliegen, wie zum Beispiel zur Montage von Verkabelungen im Automobilbereich. Dies ermöglicht das Abziehen von einzelnen Stücken vom Liner. Im Gegensatz zu den üblichen Stanzlingen sind die Stücke hier aber aneinanderliegend auf dem Liner und damit immer rechteckig.

Die Trägerschicht umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-) elektronischen Anordnung), Mehrschichtanordnungen und dergleichen. Dabei sind für verschiedene Anwendungen unterschiedlichste Trägerschichten wie zum Beispiel Folien, Gewebe, Vliese und Papiere mit den Klebemassen kombinierbar.

Als Trägerschicht werden vorliegend bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien: Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI). Besonders bevorzugt wird als Trägerschicht PET verwendet.

Die Trägerschicht kann zudem mit organischen oder anorganischen Beschichtungen oder Schichten kombiniert sein. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

Bei Bedarf kann vor dem Aufbringen der Zusammensetzung auf die Trägerschicht eine Primerschicht, insbesondere lösungsmittelfrei wie zum Beispiel durch Coextrusion, aufgebracht werden, so dass sich zwischen der Trägerschicht und einer Haftklebemasse eine Primerschicht befindet. Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit der gehärteten Haftklebemasse. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Zusammensetzungen, insbesondere solche auf Acrylatbasis. Beschreibungen der üblichen Primer finden sich zum Beispiel in "Handbook of Pressure Sensitive Adhesive Technology", D. Satas, (3. Auflage).

Des Weiteren kann die Trägerschicht rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl. Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von $C_{14}$- bis $C_{28}$-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethylsiloxanen) oder Fluorsilikonverbindungen.

Erfindungsgemäße Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt. Ein Liner (Trennpapier, Trennfolie) ist nicht Bestandteil eines Haftklebestreifens, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden. Die Releaseliner sorgen des Weiteren dafür, dass die Klebmasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die

richtige Seite der Klebemasse zuerst freigelegt wird.

Der Liner (Trennpapier, Trennfolie) ist nicht Bestandteil des Klebebandes, sondern nur ein Hilfsmittel zu dessen Herstellung, Lagerung oder für die Weiterverarbeitung durch Stanzen. Wird ein doppelseitig klebendes, mit einem Liner ausgerüstetes Klebeband abgerollt, wird es normalerweise mit der offenen, also linerfreien, Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Um das in der Regel unmittelbar vor der Applikation stattfindende Entfernen eines Releaseliners vom Klebeband zu erleichtern, werden die Liner gelegentlich auf ihrer Rückseite (der Abrollseite) mit Anfasshilfen, so genannten "Tabs" versehen. Diese erleichtern das Abziehen des Liners insofern, als nicht erst zwischen Liner und Klebmasse eingedrungen werden muss, um ein Stück Liner greifen und nachfolgend den Liner weiter abziehen zu können; vielmehr genügt ein Greifen des Tabs, um den Liner problemlos entfernen zu können. Zu diesem Zweck werden die Tabs auf die Linerrückseite derart aufgeschweißt oder angeklebt, dass ein greifbarer Teil des Tabs nicht mit dem Liner verbunden ist, sondern von dessen Oberfläche absteht oder lose auf dieser aufliegt. Derartige Anfasshilfen sind beispielsweise in EP 2 426 185 A1 beschrieben.

Doppelseitige Klebebänder werden bei Bedarf zu einer kreuzgewickelten Langrolle, auch Spule genannt, aufgewickelt und daher bei ihrer Herstellung und Lagerung auf einer Seite häufig mit einem weiteren Releaseliner versehen. Dieser häufig als "Hilfsliner" oder auch als "Interliner" bezeichnete weitere Releaseliner weist gegenüber der Breite des Klebebandes in der Regel beiderseits einen Überstand auf und kann daher u.a. ein Miteinanderverkleben der Seitenkanten des aufgewickelten Klebebandes, auch Verblocken genannt, verhindern.

Releaseliner bestehen typischerweise aus zumindest einer abhäsiven Schicht, auch als "Trennschicht" bezeichnet, um die Adhäsionsneigung von adhärierenden Produkten gegenüber diesen Oberflächen zu verringern (trennwirksame Funktion). Diese Schicht kann auf einem Trägermaterial aufgebracht sein. Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien. Auch polymerbeschichtete Papiere oder Vliese sind anzutreffen.

Als Trennschicht eingesetzt werden können alle dem Fachmann bekannten Systeme, insbesondere solche, welche im "Handbook of Pressure Sensitive Adhesive Technology" von Donatas Satas (Satas & Associates, Warwick 1999) genannt sind. Das Material der abhäsiven Trennschicht ist nach dem Stand der Technik bevorzugt ausgewählt aus der Gruppe umfassend Silikone, fluorierte Silikone, Silikon-Copolymere, Wachse, Carbamate, Fluorpolymere, mit hydrophoben Seitenketten ausgestattete Poly- und Oligoacrylate, Polyolefine sowie Mischungen aus zwei oder mehr der genannten Stoffe.

Das erfindungsgemäße Klebeband kann ein doppelseitiges Klebeband darstellen, das eine erfindungsgemäße gehärtete Haftklebemasse, wie vorstehend definiert, und eine hitzeaktivierbare Klebstoffschicht umfasst, wobei die gehärtete Haftklebmasseschicht mit einem Releaseliner abgedeckt ist. Derartige doppelseitige Klebebänder mit einer hitzeaktivierbaren Klebstoffschicht werden in der Regel zu einer wie zuvor beschriebenen kreuzgewickelten Langrolle bzw. Spule aufgewickelt, wobei in der Regel der Interliner auf der Seite der hitzeaktivierbaren Schichte vorliegt.

Als Produktaufbauten sind hinsichtlich des Klebebands verschiedene denkbar. Stets ist zumindest eine erfindungsgemäße gehärtete Haftklebemasse vorhanden. Die gehärtete Haftklebemasse kann dabei eine Dicke von 10 bis 1000 $\mu$m, vorzugsweise 15 bis 500 $\mu$m, bevorzugter 15 $\mu$m bis 300 $\mu$m, noch bevorzugter 20 $\mu$m bis 300 $\mu$m, noch bevorzugter 20 bis 200 $\mu$m, insbesondere 20 bis 150 $\mu$m, wie zum Beispiel 20 bis 100 $\mu$m $\mu$m aufweisen. Im Klebeband können weitere Schichten enthalten sein wie z.B. weitere Klebeschichten. Darüber hinaus können nichtklebrige Schichten, worunter insbesondere wenig dehnbare ($\varepsilon_{max}$ < 100 %) oder dehnbare ($\varepsilon_{max}$ mindestens 100 %) Trägerschichten zu verstehen sind, im Klebeband enthalten sein.

Der Masseauftrag (Beschichtungsstärke) der gehärteten Hatfklebemasse liegt vorzugsweise zwischen 10 und 150 g/m$^2$, weiter vorzugsweise zwischen 15 und 100 g/m$^2$, ganz besonders vorzugsweise zwischen 20 und 35 g/m$^2$.

Das Haftklebeband wird dadurch gebildet, dass auf den Träger partiell oder vollflächig die Zusammensetzung aufgetragen und anschließend mittels Elektronenbestrahlung (ESH) gehärtet wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Zusammensetzung rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Zusammensetzung kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Zusammensetzung oder einer physikalischen Vorbehandlung der Trägeroberfläche zur Verbesserung der Haftung der Zusammensetzung auf dem Träger.

Als Primer sind die bekannten Dispersion- und Lösungsmittelsysteme verwendbar zum Beispiel auf Basis von Isopren- oder Butadien-haltigen Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Seite der Trägerfolie aufgebracht werden. Als physikalische Oberflächenbehandlungen eigenen sich zum Beispiel Beflammung, Corona oder Plasma oder Coextrusionsschichten.

Weiter kann das Trägermaterial vor- beziehungsweise nachbehandelt werden. Gängige Vorbehandlungen sind Hydrophobieren, Coronavorbehandlungen wie N2-Corona oder Plasmavorbehandlungen, geläufige Nachbehandlungen sind Kalandern, Tempern, Kaschieren, Stanzen und Eindecken.

Das Klebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Die Herstellung des erfindungsgemäßen Klebebands kann durch übliche, dem Fachmann bekannte Beschichtungsverfahren erfolgen. Hierbei kann die Haftklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oderofen entfernt werden. Alternativ kann die Beschichtung der Trägerfolie oder Trennfolie auch in einem lösemittelfreien Verfahren erfolgen. Hierzu wird der Acrylnitril-Butadien-Kautschuk und das Klebharz in einem Extruder erwärmt und aufgeschmolzen. In dem Extruder können weitere Prozessschritte wie das Mischen mit den beschriebenen Additiven, Filtration oder eine Entgasung erfolgen. Die Schmelze wird dann mittels eines Kalanders auf die Trägerfolie oder Trennfolie beschichtet.

Das erfindungsgemäße Haftklebeband hat vorzugsweise eine Klebkraft auf einem Stahluntergrund von mindestens 6,0 N/cm bei einem Masseauftrag von 50 g/$m^2$.

Bezüglich weiterer bevorzugter Ausführungsformen des erfindungsgemäßen Klebebands, insbesondere bezüglich der gehärteten Haftklebemasse, gilt mutatis mutandis das zu dem erfindungsgemäßen Verfahren sowie zu der erfindungsgemäßen gehärteten Haftklebemasse Gesagte.

Das erfindungsgemäße Haftklebeband hat vorzugsweise eine Klebkraft auf einem Stahluntergrund von mindestens 6,0 N/cm bei einem Masseauftrag von 50 g/$m^2$.

Bezüglich weiterer bevorzugter Ausführungsformen des erfindungsgemäßen Klebebands, insbesondere bezüglich der gehärteten Haftklebemasse, gilt mutatis mutandis das zu dem erfindungsgemäßen Verfahren sowie zu der erfindungsgemäßen gehärteten Haftklebemasse Gesagte.

Ein vierter Gegenstand der vorliegenden Erfindung ist ein beidseitig klebendes Klebeband, umfassend eine erfindungsgemäße gehärtete Haftklebemasse, wobei das beidseitig klebende Klebeband insbesondere trägerlos ausgestaltet ist.

Bezüglich weiterer bevorzugter Ausführungsformen des erfindungsgemäßen Klebebands, insbesondere bezüglich der gehärteten Haftklebemasse, gilt mutatis mutandis das zu dem erfindungsgemäßen Verfahren, zu der erfindungsgemäßen gehärteten Haftklebemasse sowie zu dem erfindungsgemäßen ein- oder beidseitig klebendem Klebeband Gesagte.

Schließlich ist ein weiterer Gegenstand der vorliegenden Erfindung die Verwendung einer erfindungsgemäßen gehärteten Haftklebemasse oder eines erfindungsgemäßes Klebebandes zur Verklebung von Bauteilen in elektronischen Geräten, insbesondere in mobilen elektronischen Geräten, bevorzugt Tablets, Mobiltelefone oder Smart-Watches.

Bezüglich weiterer bevorzugter Ausführungsformend der erfindungsgemäßen Verwendung, insbesondere bezüglich der gehärteten Haftklebemasse sowie des Klebebands, gilt mutatis mutandis das zu dem erfindungsgemäßen Verfahren, zu der erfindungsgemäßen gehärteten Haftklebemasse sowie zu dem erfindungsgemäßen Klebeband Gesagte.

Nach einer bevorzugten Ausführungsform betrifft die vorliegende Erfindung ein Verfahren, wobei die Gesamtstrahlendosis 5 bis 40 kGy, vorzugsweise 5 bis 30 kGy, bevorzugt 5 bis 20 kGy, insbesondere 15 kGy, beträgt.

Nach einer bevorzugten Ausführungsform betrifft die vorliegende Erfindung ein Verfahren nach der vorangehenden Ausführungsform, wobei der mindestens eine feste Acrylnitril-Butadien-Kautschuk (a) einen Acrylnitrilgehalt von 20 bis 40 Gew.-%, vorzugsweise von 20 bis 30 Gew.-%, insbesondere von 20 bis 25 Gew.-%, jeweils bezogen auf das Gesamtgewicht des festen Acrylnitril-Butadien-Kautschuks, aufweist.

Nach einer bevorzugten Ausführungsform betrifft die vorliegende Erfindung ein Verfahren nach einer der vorangehenden Ausführungsformen, wobei der mindestens eine feste Acrylnitril-Butadien-Kautschuk (a) eine Glasübergangstemperatur $T_g$ von weniger als -35°C, bevorzugt von weniger als -40 °C, insbesondere von -42 °C, gemessen mittels DSC nach DIN 53 765:1994, Abschnitt 7.1, Anmerkung 1, aufweist.

Nach einer bevorzugten Ausführungsform betrifft die vorliegende Erfindung ein Verfahren nach einer der vorangehenden Ausführungsformen, wobei die Zusammensetzung den mindestens einen festen Acrylnitril-Butadien-Kautschuk in einer Gesamtmenge von 50 bis 80 Gew.-Teilen enthält, vorzugsweise von 55 bis 75 Gew.-Teilen,

insbesondere von 62 bis 67 Gew.-Teilen, wobei die Gew.-Teile von (a), (b) und (c) so normiert sind, dass (a) + (b) + (c) 100 ergibt.

Nach einer bevorzugten Ausführungsform betrifft die vorliegende Erfindung ein Verfahren nach einer der vorangehenden Ausführungsformen, wobei das mindestens eine Klebharz (b) ein modifiziertes aromatisches Kohlenwasserstoffharz ist.

Nach einer bevorzugten Ausführungsform betrifft die vorliegende Erfindung ein Verfahren nach einer der vorangehenden Ausführungsformen, wobei die Zusammensetzung das mindestens eine Klebharz (b), insbesondere das modifizierte aromatische Kohlenwasserstoffharz, in einer Gesamtmenge von 20 bis 50 Gew.-Teilen enthält, vorzugsweise von 25 bis 45 Gew.-Teilen, insbesondere von 27 bis 34,5 Gew.-Teilen, wobei die Gew.-Teile von (a), (b) und (c) so normiert sind, dass (a) + (b) + (c) 100 ergibt.

Nach einer bevorzugten Ausführungsform betrifft die vorliegende Erfindung ein Verfahren nach einer der vorangehenden Ausführungsformen, wobei der mindestens eine flüssige Acrylnitril-Butadien-Kautschuk (c) eine Glasübergangstemperatur $T_g$ von mehr als -25°C, insbesondere von -23 °C, gemessen mittels DSC nach DIN 53 765:1994, Abschnitt 7.1, Anmerkung 1, aufweist.

Nach einer bevorzugten Ausführungsform betrifft die vorliegende Erfindung ein Verfahren nach einer der vorangehenden Ausführungsformen, wobei der mindestens eine flüssige Acrylnitril-Butadien-Kautschuk (c) einen Acrylnitrilgehalt von 25 bis 45 Gew.-%, vorzugsweise von 25 bis 40 Gew.-%, insbesondere von 28 bis 35 Gew.-%, jeweils bezogen auf das Gesamtgewicht des flüssigen Acrylnitril-Butadien-Kautschuks, aufweist.

Nach einer bevorzugten Ausführungsform betrifft die vorliegende Erfindung ein Verfahren nach einer der vorangehenden Ausführungsformen, wobei die Zusammensetzung den mindestens einen flüssigen Acrylnitril-Butadien-Kautschuk (c) in einer Gesamtmenge von 1 bis 10 Gew.-Teilen enthält, vorzugsweise von 1 bis 8 Gew.-Teilen, insbesondere von 2,5 bis 6 Gew.-Teilen, wobei die Gew.-Teile von (a), (b) und (c) so normiert sind, dass (a) + (b) + (c) 100 ergibt.

Nach einer bevorzugten Ausführungsform betrifft die vorliegende Erfindung ein Verfahren nach einer der vorangehenden Ausführungsformen, wobei die Zusammensetzung von den Komponenten (a) bis (c) verschiedene Polymere in einer Gesamtmenge von 0 bis 5 Gew.-Teilen enthält, vorzugsweise von 0 bis 2 Gew.- Teilen, insbesondere von 0 Gew.- Teilen, jeweils bezogen auf (a) + (b) + (c) = 100.

Nach einer bevorzugten Ausführungsform betrifft die vorliegende Erfindung ein Verfahren nach einer der vorangehenden Ausführungsformen, wobei die Zusammensetzung zusätzlich mindestens eine Verbindung (d), ausgewählt aus der Gruppe bestehend aus Alterungsmitteln, Trennmitteln, Füllstoffen, Farbstoffen, Weichmachern sowie deren Mischungen, enthält.

Nach einer bevorzugten Ausführungsform betrifft die vorliegende Erfindung ein Verfahren nach der vorangehenden Ausführungsform, wobei die Zusammensetzung die mindestens eine Verbindung (d) in einer Gesamtmenge von 0,1 bis 5 Gew.-Teilen enthält, insbesondere von 0,1 bis 2 Gew.-Teilen, jeweils bezogen auf (a) + (b) + (c) = 100.

Nach einer bevorzugten Ausführungsform betrifft die vorliegende Erfindung eine gehärtete Haftklebemasse erhalten oder erhältlich nach dem erfindungsgemäßen Verfahren oder dem Verfahren gemäß einer der vorangehenden Ausführungsformen.

Nach einer bevorzugten Ausführungsform betrifft die vorliegende Erfindung ein ein- oder beidseitig klebendes Klebeband, umfassend eine gehärtete Haftklebemasse nach der vorangehenden Ausführungsform auf einer Trägerschicht.

Nach einer bevorzugten Ausführungsform betrifft die vorliegende Erfindung ein beidseitig klebendes Klebeband, umfassend eine gehärtete Haftklebemasse nach der oben beschriebenen bevorzugten Ausführungsform, wobei das beidseitig klebende Klebeband insbesondere trägerlos ausgestaltet ist.

Nach einer bevorzugten Ausführungsform betrifft die vorliegende Erfindung die Verwendung einer gehärteten Haftklebemasse nach der oben beschriebenen bevorzugten Ausführungsform oder eines Klebebandes nach einer der voranstehenden bevorzugten Ausführungsformen zur Verklebung von Bauteilen in elektronischen Geräten, insbesondere in mobilen elektronischen Geräten, bevorzugt Tablets, Mobiltelefone oder Smart-Watches.

Die vorliegende Erfindung wird im Folgenden anhand von Ausführungsbeispielen näher erläutert. Solange es nicht anders angegeben wird, sind alle Anteile von Komponenten jeweils auf ihr Gewicht bezogen angegeben.

**Beispiele:**

Prüfmethoden

Die Messungen werden, wenn nicht anders angegeben, bei einem Prüfklima von 23 ± 1 °C und 50 ± 5 % rel. Luftfeuchte durchgeführt.

Glasübergangstemperatur $T_g$

Die Glasübergangstemperatur werden angegeben als Ergebnis von Messungen mittels Dynamischer Differenzkalorimetrie DDK (englisch Dynamic Scanning Calorimetry; DSC) gemäß der DIN 53 765:1994, insbesondere Abschnitte 7.1 und 8.1, jedoch mit einheitlichen Heiz- und Kühlraten von 10 K/min in allen Heiz- und Kühlschritten (vergleiche DIN 53 765:1994, Abschnitt 7.1, Anmerkung 1). Die Probeneinwaage beträgt 20 mg.

Klebkraft:

Die Prüfung der Schälfestigkeit (Klebkraft) erfolgte in Anlehnung an PSTC-1.

Ein 0,5 cm breiter Streifen des Klebebands, bestehend aus einer 23 μm dicken, mit Trichloressigsäure geätzten PET-Folie und einer darauf aufgebrachten 50 μm dicken gehärteten Haftklebemasse wird auf dem Prüfuntergrund in Form einer ASTM-Stahlplatte durch fünfmaliges doppeltes Überrollen mittels einer 4 kg Rolle verklebt.

Die Oberfläche der Stahlplatte wird zuvor mit Aceton gereinigt. Die Platte wird eingespannt, und der Klebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben, über drei Messungen gemittelt und normiert auf die Breite des Streifens in N/cm angegeben.

Die initiale Klebkraft (Klebkraft Stahl) wurde direkt im Anschluss an das Verkleben und max. 10 min nach der Verklebung gemessen.

Zur Bestimmung der chemischen Beständigkeit wurden die verklebten Muster nach dem Aufrollen unterschiedlich gelagert.

Zunächst wurden alle Muster nach dem Verkleben für 24 Stunden bei 23 °C und 50 % rel. Luftfeuchtigkeit gelagert.

Als Blindwert wurden jeweils Muster für 72 Stunden bei 65 °C und 90 % rel. Luftfeuchtigkeit gelagert. Nach der Lagerung wurden die Proben für weitere 24 Stunden bei 23 °C und 50 % rel. Luftfeuchtigkeit gelagert und anschließend vermessen.

Zur Bestimmung der chemischen Beständigkeit wurden die Muster bei 65 °C und 90 % rel. Luftfeuchtigkeit in Ölsäure (CAS Nr. 112-80-1, Qualität der Reinheit mindestens > 90 %) gelagert. Nach der Lagerung werden die Muster zunächst mit destilliertem Wasser abgespült und anschließend für 24 Stunden bei 23 °C und 50 % rel. Luftfeuchtigkeit gelagert. Erst dann erfolgte wie oben beschrieben die Messung der Klebkraft. Die Retention der Klebkraft wird dabei durch das Verhältnis des Messwertes nach der Lagerung in Ölsäure zum Blindwert berechnet.

Durchschlagzähigkeit (DuPont-Test in der z-Ebene):

Aus dem zu untersuchenden Haftklebstreifen wurde eine quadratische, rahmenförmige Probe ausgeschnitten (Außenmaße 33 mm × 33 mm; Stegbreite 2,0 mm; Innenmaße (Fensterausschnitt) 29 mm × 29 mm). Diese Probe wurde auf einen Polycarbonat-(PC)-Rahmen (Außenmaße 45 mm x 45 mm; Stegbreite 10 mm; Innenmaße (Fensterausschnitt) 25°mm x 25 mm; Dicke 3 mm) geklebt. Auf der anderen Seite des Haftklebstreifens wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 $mm^2$. Die Verklebung wurde für 5 s mit 248 N gepresst und für 48 Stunden konditioniert bei 23 °C / 50 % relativer Feuchte gelagert.

Unmittelbar nach der Lagerung wurde der Klebeverbund aus PC-Rahmen, Haftklebestreifen und PC-Fenster mit den überstehenden Kanten des PC-Rahmens derart in eine Probenhalterung gespannt, dass der Verbund waagerecht ausgerichtet war. Dabei liegt der PC-Rahmen an den überstehenden Kanten auf der Probenhalterung plan auf, so dass das PC-Fenster unterhalb des PC-Rahmens freischwebend (durch das Klebebandmuster gehalten) vorlag. Die Probenhalterung wurde anschließend in die vorgesehene Aufnahme des "DuPont Impact Tester" zentrisch eingesetzt. Der 150 g schwere Schlagkopf wurde so eingesetzt, dass die kreisförmige Aufschlaggeometrie mit dem Durchmesser 24 mm auf die von oben frei zugängliche Fläche des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht, bis die eingebrachte Stoßenergie die Probe durch die Durchschlagbelastung zerstört und das PC-Fenster sich vom PC-Rahmen löste.

Um Versuche mit unterschiedlichen Proben vergleichen zu können, wurde die Energie wie folgt berechnet:

$$E\ [J] = \text{Höhe}\ [m] * \text{Masse Gewicht}\ [kg] * 9{,}81\ kg/m*s^2$$

Es wurden fünf Proben pro Produkt getestet und der Energiemittelwert als Kennzahl für die Durchschlagzähigkeit angegeben.

Push-out-Festiqkeit (z-Ebene);

Mittels des Push-Out-Test lasen sich Aussagen darüber gewinnen, wie hoch die Beständigkeit einer Verklebung eines Bauteils in einem rahmenförmigen Körper ist, etwa eines Fensters oder Displays in einem Gehäuse.

Aus dem zu untersuchenden Klebeband wurde eine rechteckige, rahmenförmige Probe ausgeschnitten (Außenmaße 43 mm x 33 mm; Stegbreite jeweils 2,0 mm, Innenmaße (Fensterausschnitt) 39 mm x 29 mm, Klebefläche auf Ober- und Unterseite jeweils 288 mm2). Diese Probe wurde auf einen rechteckigen ABS-Kunststoffrahmen (ABS = Acrylnitril-Butadien-Styrol-Copolymere) (Außenmaße 50 mm x 40 mm, Stegbreite der langen Stege jeweils 8 mm; Stegbreite der kurzen Stege jeweils 10 mm; Innenmaße (Fensterausschnitt) 30 mm x 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm x 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 288 mm2. Die Verklebung wurde bei 23°C für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte.

Ein Druckstempel wird nun mit einer konstanten Geschwindigkeit von 10 mm/s senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft $F_{max}$ im Kraft-Zeit-Diagramm in N) wird als Antwort des Push-Out-Tests registriert.

Mikroscherweq (MS):

Aus dem zu untersuchenden Haftklebeband wird ein 10 mm × 50 mm großes Flächenstück geschnitten und das so erhaltene Klebebandmuster derart auf eine polierte, temperierbare, mit Aceton gereinigte 13 mm breite Stahl-Prüfplatte verklebt, dass die Längsrichtung des Klebebandmusters in Querrichtung der Stahlplatte ausgerichtet ist, die Verklebungsfläche die Dimensionen l × b = 13 mm × 10 mm beträgt und das Klebeband die Stahlplatte auf einer Seite um ein Stück der Länge z = 2 mm überragt. Zur Fixierung wird das Klebeband anschließend mit einer 2 kg-Stahlrolle und einer Geschwindigkeit von 10 m/min sechsmal überrollt. Auf der der Stahlplatte abgewandten Seite des Klebebandes wird das Klebeband bündig mit der die Stahlplatte um das Stück der Länge z überragenden Kante mit einem stabilen Klebestreifen (Dimensionen 4 mm × 25 mm; Träger 190 µm dicke PET-Folie) verstärkt, der als Auflage für einen Wegmessfühler dient. Die so vorbereitete Anordnung wird derart senkrecht aufgehängt, dass das die Stahlplatte überragende Stück der Länge z des Klebebandmusters nach oben zeigt. Die Stahl-Prüfplatte mit der verklebten Probe wird auf 40 °C temperiert und das zu vermessende Klebebandmuster am unteren Ende mittels einer Klammer zum Zeitpunkt t0 = 0 mit einem Gewicht von 100 g bzw. 200g belastet. Gemessen mittels des Wegmessfühlers wird die Deformation der Probe unter Scherung über einen Zeitraum von 15 Minuten (beginnend bei t0) bei einer Temperatur von 40 °C und einer relativen Luftfeuchtigkeit von 50 ± 5 %. Angegeben wird die Scherstrecke nach 15 min (Maximalwert; während der Messung nach unten zurückgelegter Weg der oberen Kante der Probe) als Ergebnis in µm. Der so gemessene Scherweg ist ein quantitatives Maß für die innere Festigkeit (Scherfestigkeit) der vermessenen Probe

Herstellung der gehärteten Haftklebmassen

Die in den Beispielen aufgeführten Zusammensetzungen wurden als Lösemittel-basierte Massen in einem Kneter mit Doppelsigmaknethaken homogenisiert. Als Lösemittel wurde Butanon (Methylethylketon, 2-Butanon) verwendet. Der Kneter wurde dabei mittels Wasserkühlung gekühlt.

In einem ersten Schritt wurde zunächst der feste Acrylnitril-Butadien-Kautschuk mit der gleichen Menge Butanon für 12 Stunden bei 23 °C vorgequollen. Anschließend wurde dieser sogenannte Vorbatch für 2 Stunden geknetet. Anschließend wurde nochmals die oben gewählte Menge Butanon und der flüssige NBR Kautschuk in zwei Schritten zugegeben und jeweils für 10 min geknetet. Anschließend wurde das Klebharz als Lösung in Butanon mit einem Feststoffgehalt von 50 % zugegeben und weitere 20 min homogen geknetet. Der finale Feststoffgehalt wird durch

Butanonzugabe auf von 30 Gew.-% eingestellt.

Die jeweilige Zusammensetzung wurde auf einem handelsüblichen Laborstreichtisch (zum Beispiel von der Firma SMO (Sondermaschinen Oschersleben GmbH)) mit Hilfe eines Streichmessers auf eine 23 μm dicke, mit Trichloressigsäure geätzte PET-Folie beschichtet. Das Butanon wurde bei 105 °C im Umlufttrockenschrank für 10 Minuten abgedampft. Die Spaltbreite beim Beschichten wurde so eingestellt, dass nach dem Abdampfen des Lösemittels ein Masseauftrag von 50 g/$m^2$ erreicht wurde. Anschließend wurden die vom Lösemittel befreiten Filme mit silikonisierter PET-Folie abgedeckt und bis zur weiteren Ausprüfung bei 23 °C und 50 % rel. Luftfeuchtigkeit gelagert.

Zur Herstellung der Muster für den Kugelfall- und push-out-Test wurde die jeweilige Zusammensetzung mit Hilfe des Laborstreichtisches auf eine silikonisierte PET-Folie beschichtet. Die Beschichtungen wurden anschließend bei 105 °C für 10 min getrocknet. Die Klebeschichten mit einem Schichtdicke von 50 μm wurden beidseitig auf eine corona-vorbehandelte 12 μm PET-Folie kaschiert, so dass ein doppelseitiges Klebebandmuster resultierte.

Für die Elektronenbestrahlung wurde eine Anlage der Firma ELECTRON CROSSLINKING AB (Halmstad, Schweden) verwendet. Die Beschleunigungsspannung betrug pro 1 μm Schichtdicke der Zusammensetzung 2 kV bzw. 2,4 kV, die Gesamtstrahlendosis jeweils 15 kGy. Die Zusammensetzung wurde dabei jeweils von beiden Seiten, d.h. symmetrisch, der Bestrahlung mit Elektronen unterzogen, um eine gleichmäßige Härtung zu gewährleisten. Vor der Bestrahlung wurde jeweils auf der zu bestrahlenden Seite der Liner abgenommen.

Beispiele

Alle Angaben der Bestandteile der Zusammensetzung in der Tabelle beziehen sich auf Gew.-Teile, wobei (a)+(b) +(c) jeweils 100 ergeben; die angegebenen Beschleunigungsspannung bezieht sich jeweils auf eine Schichtdicke der Zusammensetzung von 50 μm.

| | | H1 | gH2* | gH3 | H4 | gH5* | gH6 | H7 | gH8* | gH9 |
|---|---|---|---|---|---|---|---|---|---|---|
| | | no ESH | 15 kGy 100 kV | 15 kGy 120 kV | no ESH | 15 kGy 100 kV | 15 kGy 120 kV | no ESH | 15 kGy 100 kV | 15 kGy 120 kV |
| Zusammensetzung | Nipol N 917 [1] | 64,5 | | | 63,5 | | | 65,1 | | |
| | Picco AR 100[2] | 32,3 | | | 33,3 | | | 30 | | |
| | Nipol 1312 LV [3] | 3,2 | | | 3,2 | | | 4,9 | | |
| Messergebnisse | peel ASTM [N/cm] | 5,5 | 5,1 | 5,3 | 6,0 | 5,0 | 4,7 | 6,2 | 4,5 | 4,5 |
| | peel PP [N/cm] | | 1,7 | 1,8 | | 2,1 | 1,8 | | 2,1 | 2,5 |
| | control value [N/cm] | 8,6 | 9,5 | 8,9 | 9,9 | 9,4 | 10,3 | 11,4 | 11,2 | 11,2 |
| | oleic acid | 6,1 | 6,2 | 5,5 | 5,4 | 5,9 | 5,4 | 5,6 | 6,8 | 6,6 |
| | retention | 71,0% | 65,5% | 62,0% | 54,3% | 62,8% | 52,3% | 49,2% | 60,6% | 58,7% |
| | MS max [μm] | 271 | 161 | 170 | 239 | 224 | 204 | 303 | 201 | 141 |
| | MS min [μm] | 120 | 48 | 53 | 98 | 91 | 71 | 140 | 65 | 38 |
| | MS-delta [μm] | 151 | 112 | 117 | 141 | 134 | 133 | 163 | 136 | 104 |
| | elastic ratio | 56% | 70% | 69% | 59% | 60% | 65% | 54% | 68% | 73% |
| | DuPont Z [J] | 0,486 | 0,456 | 0,309 | 0,412 | 1 0,441 | 0,471 | 0,500 | 0,441 | 0,412 |
| | Push Out [N] | 143 | 166 | 154 | 146 | 151 | 149 | 179 | 125 | 161 |

* erfindungsgemäß

[1] fester Acrylnitril-Butadien-Kautschuk, Acrylnitrilgehalt 23 Gew.-%, Glasübergangstemperatur $T_g$ -42 °C

[2] durch Copolymerisation von mindestens einem Monomeren mit 5 Kohlenstoffatomen mit mindestens einem aromatischen Monomeren erhältliches Kohlenwasserstoffharz

[3] flüssiger Acrylnitril-Butadien-Kautschuk, Acrylnitrilgehalt 28 Gew.-%, Glasübergangstemperatur $T_g$ -23 °C

Wie aus den Beispielen hervorgeht, führt die Härtung der Zusammensetzung mittels Elektronenbestrahlung mit einer Beschleunigungsspannung von 100 kV und einer Strahlendosis von 15 kGy (gH2, gH5, gH8) nach 72-stündiger Lagerung in 65 °C warmer Ölsäure zu einer signifikant besseren Klebkraft als Zusammensetzungen, welche entweder nicht mittels Elektronenbestrahlung gehärtet wurden (H1, H4, H7) oder welche unter Verwendung einer höheren Beschleunigungsspannung von 120 kV gehärtet wurden (gH3, gH6, gH9). Die genannte Chemikalie (Ölsäure) steht dabei nur stellvertretend. Ebenso sind die erfindungsgemäßen Haftklebemassen beständig gegen Chemikalien wie Sebum, Parfüme, verdünnte Schwefelsäure, Öl-/Wasser-Emulsionen und Wasser/Öl-Emulsionen wie sie in Kosmetikprodukten eingesetzt werden, und Bremsflüssigkeit. Auch diese Liste ist nicht abschließend zu verstehen, sondern hat beispielhaften Charakter.

Durch Bestrahlung mit einer bestimmten Beschleunigungsspannung kann zudem auch der push-out-Wert verbessert werden, ohne jedoch die Schockresistenz signifikant zu verschlechtern. Durch Erhöhung der Menge des aromatischen modifizierten Kohlenwasserstoffharzes (Pico AR 100) kann die Schockresistenz sogar gesteigert werden (vgl. H4 und gH5). Darüber hinaus kann durch die Bestrahlung mit einer bestimmten Beschleunigungsspannung die Scherfestigkeit erhöht werden.

Überraschenderweise und für den Fachmann nicht vorhersehbar ist, dass die verbesserte Beständigkeit gegen Ölsäure sowie der verbesserte Push-out-Wert bei gleichzeitig hoher Schock- und Scherbeständigkeit nur bei Einsatz von bestimmten Beschleunigungsspannungen bei Härtung durch ESH erreicht wird. Die Erhöhung der Beschleunigungsspannung führt sowohl zu einer verschlechterten Chemikalienbeständigkeit als auch zu einer verschlechterten Schockresistenz.

Die gemessenen Werte für den push-out Test belegen eine ausgezeichnete Eignung der erfindungsgemäßen gehärteten Haftklebmassen zur Verklebung von Fenstern oder Displays in Gehäusen. Dabei ist insbesondere die im Kugelfalltest ermittelte Schockbeständigkeit überraschend.

## Patentansprüche

1. Verfahren zur Erzeugung einer gehärteten Haftklebemasse aus einer Zusammensetzung enthaltend

   a) mindestens einen festen Acrylnitril-Butadien-Kautschuk, welcher eine Glasübergangstemperatur $T_g$ von weniger als -30 °C (gemessen nach der angegebenen Messmethode) aufweist,
   b) mindestens ein Klebharz und
   c) mindestens einen flüssigen Acrylnitril-Butadien-Kautschuk, welcher eine Glasübergangstemperatur $T_g$ von mehr als -30 °C (gemessen nach der angegebenen Messmethode) aufweist,

   **dadurch gekennzeichnet, dass**
   die Zusammensetzung einer Elektronenbestrahlung (ESH) mit einer Beschleunigungsspannung pro 1 μm Schichtdicke der Zusammensetzung von 1,8 bis 2,38 kV und einer Gesamtstrahlendosis von 5 bis 50 kGy unterzogen wird, wobei die gehärtete Haftklebemasse erhalten wird.

2. Verfahren nach Anspruch 1, **dadurch gekennzeichnet, dass** die Beschleunigungsspannung pro 1 μm Schichtdicke der Zusammensetzung 1,9 bis 2,3 kV, vorzugsweise 1,96 bis 2,24 kV, insbesondere 2 kV, beträgt.

3. Verfahren nach einem der Ansprüche 1 oder 2, **dadurch gekennzeichnet, dass** die Gesamtstrahlendosis 5 bis 40 kGy, vorzugsweise 5 bis 30 kGy, bevorzugt 5 bis 20 kGy, insbesondere 15 kGy, beträgt.

4. Verfahren nach einem der vorangehenden Ansprüche, **dadurch gekennzeichnet, dass** der mindestens eine feste Acrylnitril-Butadien-Kautschuk (a) einen Acrylnitrilgehalt von 20 bis 40 Gew.-%, vorzugsweise von 20 bis 30 Gew.-%, insbesondere von 20 bis 25 Gew.-%, jeweils bezogen auf das Gesamtgewicht des festen Acrylnitril-Butadien-Kautschuks, aufweist.

5. Verfahren nach einem der vorangehenden Ansprüche, **dadurch gekennzeichnet, dass** die Zusammensetzung den mindestens einen festen Acrylnitril-Butadien-Kautschuk in einer Gesamtmenge von 50 bis 80 Gew.-Teilen enthält, vorzugsweise von 55 bis 75 Gew.-Teilen, insbesondere von 62 bis 67 Gew.-Teilen, wobei die Gew.-Teile von (a), (b) und (c) so normiert sind, dass (a) + (b) + (c) 100 ergibt.

6. Verfahren nach einem der vorangehenden Ansprüche, **dadurch gekennzeichnet, dass** das mindestens eine Klebharz (b) ein modifiziertes aromatisches Kohlenwasserstoffharz ist.

7. Verfahren nach einem der vorangehenden Ansprüche, **dadurch gekennzeichnet, dass** die Zusammensetzung das mindestens eine Klebharz (b), insbesondere das modifizierte aromatische Kohlenwasserstoffharz, in einer Gesamtmenge von 20 bis 50 Gew.-Teilen enthält, vorzugsweise von 25 bis 45 Gew.-Teilen, insbesondere von 27 bis 34,5 Gew.-Teilen, wobei die Gew.-Teile von (a), (b) und (c) so normiert sind, dass (a) + (b) + (c) 100 ergibt.

8. Verfahren nach einem der vorangehenden Ansprüche, **dadurch gekennzeichnet, dass** der mindestens eine flüssige Acrylnitril-Butadien-Kautschuk (c) einen Acrylnitrilgehalt von 25 bis 45 Gew.-%, vorzugsweise von 25 bis 40 Gew.-%, insbesondere von 28 bis 35 Gew.- %, jeweils bezogen auf das Gesamtgewicht des flüssigen Acrylnitril-Butadien-Kautschuks, aufweist.

9. Verfahren nach einem der vorangehenden Ansprüche, **dadurch gekennzeichnet, dass** die Zusammensetzung den mindestens einen flüssigen Acrylnitril-Butadien-Kautschuk (c) in einer Gesamtmenge von 1 bis 10 Gew.-Teilen enthält, vorzugsweise von 1 bis 8 Gew.-Teilen, insbesondere von 2,5 bis 6 Gew.-Teilen, wobei die Gew.-Teile von (a), (b) und (c) so normiert sind, dass (a) + (b) + (c) 100 ergibt.

10. Verfahren nach einem der vorangehenden Ansprüche, **dadurch gekennzeichnet, dass** die Zusammensetzung von den Komponenten (a) bis (c) verschiedene Polymere in einer Gesamtmenge von 0 bis 5 Gew.-Teilen enthält, vorzugsweise von 0 bis 2 Gew.- Teilen, insbesondere von 0 Gew.- Teilen, jeweils bezogen auf (a) + (b) + (c) = 100.

11. Verfahren nach einem der vorangehenden Ansprüche, **dadurch gekennzeichnet, dass** die Zusammensetzung zusätzlich mindestens eine Verbindung (d), ausgewählt aus der Gruppe bestehend aus Alterungsmitteln, Trennmitteln, Füllstoffen, Farbstoffen, Weichmachern sowie deren Mischungen, enthält, wobei die Zusammensetzung die mindestens eine Verbindung (d) vorzugsweise in einer Gesamtmenge von 0,1 bis 5 Gew.-Teilen enthält, insbesondere von 0,1 bis 2 Gew.-Teilen, jeweils bezogen auf (a) + (b) + (c) = 100.

12. Gehärtete Haftklebemasse erhalten oder erhältlich nach einem Verfahren gemäß einem der Ansprüche 1 bis 11.

13. Ein- oder beidseitig klebendes Klebeband, umfassend eine gehärtete Haftklebemasse nach Anspruch 12 auf einer Trägerschicht.

14. Beidseitig klebendes Klebeband, umfassend eine gehärtete Haftklebemasse nach Anspruch 12, wobei das beidseitig klebende Klebeband insbesondere trägerlos ausgestaltet ist.

15. Verwendung einer gehärteten Haftklebemasse nach Anspruch 12 oder eines Klebebandes nach Anspruch 13 oder 14 zur Verklebung von Bauteilen in elektronischen Geräten, insbesondere in mobilen elektronischen Geräten, bevorzugt Tablets, Mobiltelefone oder Smart-Watches.

## Claims

1. A process for the production of a cured pressure-sensitive adhesive from a composition containing:

   a) at least one solid acrylonitrile-butadiene rubber, which has a glass transition temperature $T_g$ of less than -30°C (measured in accordance with the specified measurement method)
   b) at least one tackifying resin, and
   c) at least one liquid acrylonitrile-butadiene rubber, which has a glass transition temperature $T_g$ of more than -30°C (measured in accordance with the specified measurement method),

   **characterized in that**
   the composition undergoes electron beam irradiation (EBI) with an acceleration voltage per 1 μm of layer thickness of the composition of 1.8 to 2.38 kV and a total radiation dose of 5 to 50 kGy, whereupon the cured pressure-sensitive adhesive is obtained.

2. The process as claimed in claim 1, **characterized in that** the acceleration voltage per 1 μm of layer thickness of the composition is 1.9 to 2.3 kV, preferably 1.96 to 2.24 kV, in particular 2 kV.

3. The process as claimed in one of claims 1 or 2, **characterized in that** the total radiation dose is 5 to 40 kGy, preferably 5 to 30 kGy, more preferably 5 to 20 kGy, in particular 15 kGy.

4. The process as claimed in one of the preceding claims, **characterized in that** the at least one solid acrylonitrile-butadiene rubber (a) has an acrylonitrile content of 20% to 40% by weight, preferably of 20% to 30% by weight, in particular of 20% to 25% by weight, each related to the total weight of the solid acrylonitrile-butadiene rubber.

5. The process as claimed in one of the preceding claims, **characterized in that** the composition contains the at least one solid acrylonitrile-butadiene rubber in a total quantity of 50 to 80 parts by weight, preferably of 55 to 75 parts by weight, in particular of 62 to 67 parts by weight, wherein the parts by weight of (a), (b) and (c) are normalized such that (a)+(b)+(c) adds up to 100.

6. The process as claimed in one of the preceding claims, **characterized in that** the at least one tackifying resin (b) is a modified aromatic hydrocarbon resin.

7. The process as claimed in one of the preceding claims, **characterized in that** the composition contains the at least one tackifying resin (b), in particular the modified aromatic hydrocarbon resin, in a total quantity of 20 to 50 parts by weight, preferably of 25 to 45 parts by weight, in particular of 27 to 34.5 parts by weight, wherein the parts by weight of (a), (b) and (c) are normalized such that (a)+(b)+(c) adds up to 100.

8. The process as claimed in one of the preceding claims, **characterized in that** the at least one liquid acrylonitrile-butadiene rubber (c) has an acrylonitrile content of 25% to 45% by weight, preferably of 25% to 40% by weight, in particular of 28 to 35% by weight, each related to the total weight of the liquid acrylonitrile-butadiene rubber.

9. The process as claimed in one of the preceding claims, **characterized in that** the composition contains the at least one liquid acrylonitrile-butadiene rubber (c) in a total quantity of 1 to 10 parts by weight, preferably of 1 to 8 parts by weight, in particular of 2.5 to 6 parts by weight, wherein the parts by weight of (a), (b) and (c) are normalized such that (a)+(b)+(c) adds up to 100.

10. The process as claimed in one of the preceding claims, **characterized in that** the composition contains polymers which are different from the components (a) to (c) in a total quantity of 0 to 5 parts by weight, preferably of 0 to 2 parts by weight, in particular of 0 parts by weight, each related to (a)+(b)+(c)=100.

11. The process as claimed in one of the preceding claims, **characterized in that** the composition additionally contains at least one compound (d) selected from the group consisting of anti-aging agents, separating agents, fillers, dyes, plasticizers, as well as mixtures thereof, wherein the composition preferably contains the at least one compound (d) in a total quantity of 0.1 to 5 parts by weight, in particular of 0.1 to 2 parts by weight, each related to (a)+(b)+(c)=100.

12. A cured pressure-sensitive adhesive obtained or obtainable in accordance with a process as claimed in one of claims 1 to 11.

13. A single-sided or double-sided adhesive tape, comprising a cured pressure-sensitive adhesive as claimed in claim 12 on a carrier layer.

14. A double-sided adhesive tape comprising a cured pressure-sensitive adhesive as claimed in claim 12, wherein in particular, the double-sided adhesive tape is in a carrier-free configuration.

15. Use of a cured pressure-sensitive adhesive as claimed in claim 12 or of an adhesive tape as claimed in claim 13 or claim 14 for bonding components in electronic devices, in particular in mobile electronic devices, preferably tablets, mobile phones or smart watches.

## Revendications

1. Procédé de fabrication d'une masse durcie d'adhésif sensible à la pression à partir d'une composition contenant

   a) au moins un caoutchouc solide de type acrylonitrile-butadiène dont la température de transition vitreuse $T_g$ est inférieure à -30 °C (mesurée selon la méthode de mesure indiquée),
   b) au moins une résiné collante, et
   c) au moins un caoutchouc liquide de type acrylonitrile-butadiène dont la température de transition vitreuse $T_g$ est supérieure à -30 °C (mesurée selon la méthode de mesure indiquée),

**caractérisé en ce que**
ladite composition est soumise à un rayonnement d'électrons (ESH) dont la tension d'accélération par 1 μm d'épaisseur de couche de ladite composition est comprise entre 1,8 et 2,38 kV et dont la dose totale d'irradiation est comprise entre 5 et 50 kGy, pour ainsi obtenir la masse durcie d'adhésif sensible à la pression.

2. Procédé selon la revendication 1, **caractérisé en ce que** la tension d'accélération par 1 μm d'épaisseur de couche de ladite composition est comprise entre 1,9 et 2,3 kV, de préférence entre 1,96 et 2,24 kV, notamment égale à 2 kV.

3. Procédé selon l'une des revendications 1 ou 2, **caractérisé en ce que** la dose totale d'irradiation est comprise entre 5 et 40 kGy, de préférence entre 5 et 30 kGy, de préférence encore entre 5 et 20 kGy, notamment égale à 15 kGy.

4. Procédé selon l'une des revendications précédentes, **caractérisé en ce que** l'au moins un caoutchouc solide de type acrylonitrile-butadiène (a) comporte une teneur en acrylonitrile comprise entre 20 et 40 % en poids, de préférence entre 20 et 30 % en poids, notamment entre 20 et 25 % en poids, à chaque instance par rapport au poids total du caoutchouc solide de type acrylonitrile-butadiène.

5. Procédé selon l'une des revendications précédentes, **caractérisé en ce que** ladite composition contient l'au moins un caoutchouc solide de type acrylonitrile-butadiène dans une quantité totale comprise entre 50 et 80 parties en poids, de préférence entre 55 et 75 parties en poids, notamment entre 62 et 67 parties en poids, les parties en poids de (a), (b) et (c) étant telles que (a) + (b) + (c) est égal à 100.

6. Procédé selon l'une des revendications précédentes, **caractérisé en ce que** l'au moins une résine collante (b) est une résine d'hydrocarbure aromatique modifiée.

7. Procédé selon l'une des revendications précédentes, **caractérisé en ce que** ladite composition contient l'au moins une résine collante (b), s'agissant notamment de ladite résine d'hydrocarbure aromatique modifiée, dans une quantité totale comprise entre 20 et 50 parties en poids, de préférence entre 25 et 45 parties en poids, notamment entre 27 et 34,5 parties en poids, les parties en poids de (a), (b) et (c) étant telles que (a) + (b) + (c) est égal à 100.

8. Procédé selon l'une des revendications précédentes, **caractérisé en ce que** l'au moins un caoutchouc liquide de type acrylonitrile-butadiène (c) comporte une teneur en acrylonitrile comprise entre 25 et 45 % en poids, de préférence entre 25 et 40 % en poids, notamment entre 28 et 35 % en poids, à chaque instance par rapport au poids total du caoutchouc liquide de type acrylonitrile-butadiène.

9. Procédé selon l'une des revendications précédentes, **caractérisé en ce que** ladite composition contient l'au moins un caoutchouc liquide de type acrylonitrile-butadiène (c) dans une quantité totale comprise entre 1 et 10 parties en poids, de préférence entre 1 et 8 parties en poids, notamment entre 2,5 et 6 parties en poids, les parties en poids de (a), (b) et (c) étant telles que (a) + (b) + (c) est égal à 100.

10. Procédé selon l'une des revendications précédentes, **caractérisé en ce que** ladite composition contient différents polymères des constituants (a) à (c) dans une quantité totale comprise entre 0 et 5 parties en poids, de préférence entre 0 et 2 parties en poids, notamment égale à 0 parties en poids, à chaque instance par rapport à (a) + (b) + (c) = 100.

11. Procédé selon l'une des revendications précédentes, **caractérisé en ce que** la composition contient en outre au moins un composé (d) qui est choisi dans le groupe constitué par les agents de vieillissement, les agents de séparation, les charges, les colorants, les plastifiants ainsi que par leurs mélanges, ladite composition contenant l'au moins un composé (d) de préférence dans une quantité totale comprise entre 0,1 et 5 parties en poids, notamment entre 0,1 et 2 parties en poids, à chaque instance par rapport à (a) + (b) + (c) = 100.

12. Masse durcie d'adhésif sensible à la pression qui a été obtenue selon un procédé conforme à l'une des revendications 1 à 11 ou qui est susceptible d'être obtenue ainsi.

13. Ruban adhésif dont une ou les deux faces est/sont collante(s), comprenant une masse durcie d'adhésif sensible à la pression selon la revendication 12 sur une couche de support.

14. Ruban adhésif à deux faces collantes, comprenant une masse durcie d'adhésif sensible à la pression selon la revendication 12, le ruban adhésif à deux faces collantes étant notamment réalisée sans support.

**15.** Utilisation d'une masse durcie d'adhésif sensible à la pression selon la revendication 12 ou d'un ruban adhésif selon les revendications 13 ou 14 pour coller des composants au sein d'appareils électroniques, notamment au sein d'appareils électroniques portables, s'agissant préférentiellement de tablettes, de téléphones portables ou de montres connectées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3834879 A
- DE 102015215247 A1
- DE 102017206083 A1
- US 2018230342 A1
- WO 2018153618 A1
- DE 102016207822 A1
- EP 0447855 A1
- US 4133731 A
- US 4820746 A
- DE 2845541 A
- EP 2426185 A1


### In der Beschreibung aufgeführte Nicht-Patentliteratur


- **VON DONATAS SATAS**. Handbook of Pressure Sensitive Adhesive Technology. van Nostrand, 1989
- **VON DONATAS SATAS**. Handbook of Pressure Sensitive Adhesive Technology. Satas & Associates, 1999
- *CHEMICAL ABSTRACTS*, 112-80-1